(19) **Europäisches Patentamt**
**European Patent Office**
**Office européen des brevets**

(11) **EP 3 721 306 B1**

(12) **EUROPÄISCHE PATENTSCHRIFT**

(45) Veröffentlichungstag und Bekanntmachung des Hinweises auf die Patenterteilung:
**17.09.2025 Patentblatt 2025/38**

(51) Internationale Patentklassifikation (IPC):
**G05B 19/416** (2006.01)    **B25J 9/16** (2006.01)

(21) Anmeldenummer: **18803613.1**

(22) Anmeldetag: **12.11.2018**

(52) Gemeinsame Patentklassifikation (CPC):
**G05B 19/416; B25J 9/16; B25J 9/1664;**
G05B 2219/40454

(86) Internationale Anmeldenummer:
**PCT/EP2018/080885**

(87) Internationale Veröffentlichungsnummer:
**WO 2019/110244 (13.06.2019 Gazette 2019/24)**

(54) **ABFAHREN EINER VORGEGEBENEN ARBEITSBAHN MIT EINEM ROBOTER**

MOVING A ROBOT ALONG APREDETERMINED WORKING PATH

DÉPLACEMENT D'UN ROBOT SUR UNE TRAJECTOIRE DE TRAVAIL PRÉDÉFINIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2017 DE 102017011334**

(43) Veröffentlichungstag der Anmeldung:
**14.10.2020 Patentblatt 2020/42**

(73) Patentinhaber: **KUKA Deutschland GmbH**
**86165 Augsburg (DE)**

(72) Erfinder:
• **BURKHART, Stefan**
**89407 Dillingen (DE)**
• **HÜTTENHOFER, Manfred**
**86405 Meitingen (DE)**
• **SCHREITTMILLER, Robert**
**86316 Stätzling (DE)**
• **WIEDEMANN, Günther**
**86368 Gersthofen (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**EP-A1- 2 315 093      WO-A1-00/73967**
**WO-A1-96/30896      DE-A1- 102014 103 370**

• **CLAUDIO MELCHIORRI: "Trajectory Planning for Robot Manipulators Part 2", 30 May 2011 (2011-05-30), pages 1 - 21, XP055555956, Retrieved from the Internet <URL:http://www-lar. deis.unibo.it/people/cmelchiorri/Files_Robotica/ FIR_07_Traj_2.pdf> [retrieved on 20190213]**
• **JÖRG L BARTENSCHLAGER ET AL: "Kinematische Beschreibung von Industrierobotern", HANDHABUNGSTECHNIK MIT ROBOTERTECHNIK, 1 February 1998 (1998-02-01), pages 287 - 360, XP055556148, Retrieved from the Internet <URL:https://link. springer.com/content/pdf/ bbm:978-3-663-12166-4/1.pdf> [retrieved on 20190213]**

**Beschreibung**

Die vorliegende Erfindung betrifft ein Verfahren und eine Steuerung zum Abfahren einer vorgegebenen Arbeitsbahn mit einem Roboter sowie eine Roboteranordnung mit dem Roboter und der Steuerung und ein Computerprogrammprodukt zur Durchführung des Verfahrens.

Nach betriebsinterner Praxis ist es bereits bekannt, für Roboter Arbeitsbahnen vorzugeben und für diese vorab mit einem vorgegebenen Profilparameter ein Geschwindigkeitsprofil zu planen.

So kann beispielsweise eine lineare Bahn eines Roboter-TCPs im Arbeitsraum vorgegeben und für diese im Arbeitsraum ein trapezförmiges Geschwindigkeitsprofil geplant werden, dessen Beschleunigung und Konstantfahrgeschwindigkeit durch Vorgabe eines entsprechenden Profilparameters vorgegeben werden kann, wobei die Konstantfahrgeschwindigkeit je nach Länge der Bahn gegebenenfalls nicht erreicht wird.

Beim tatsächlichen Abfahren der vorgegebenen Arbeitsbahn mit dem geplanten Geschwindigkeitsprofil können unzulässig hohe Achslasten, -geschwindigkeiten und/oder -beschleunigungen auftreten, was bislang ein mühsames Nachjustieren oder eine unnötig defensive Anfangswahl des vorgegebenen Profilparameters bedingt. Die Internetveröffentlichungen C. Melchiorri, "Trajectory Planning for Robot Manipulators Part 2", S. 1-21, und J. Bartenschlager et al., "Kinematische Beschreibung von Industrierobotern", Handhabungstechnik mit Robotertechnik, S. 287-360 beschreiben Bahnparameter-Zeitprofile auf Basis maximaler Beschleunigungen und Geschwindigkeiten. Die Patentanmeldung EP2315093A1 offenbart ein Verfahren und eine Vorrichtung zur Steuerung eines Manipulators, wobei eine Soll-Bahn des Manipulators und eine Bewegungsgröße für diese Soll-Bahn bestimmt werden.

Aufgabe der vorliegenden Erfindung ist es, das Abfahren von vorgegebenen Arbeitsbahnen mit Robotern zu verbessern.

Diese Aufgabe wird durch ein Verfahren mit den Merkmalen des Anspruchs 1 gelöst. Ansprüche 11 bis 13 stellen eine Steuerung bzw. Computerprogrammprodukt zur Durchführung eines hier beschriebenen Verfahrens bzw. eine Roboteranordnung mit einer hier beschriebenen Steuerung unter Schutz. Die Unteransprüche betreffen vorteilhafte Weiterbildungen.

Nach einer Ausführung der vorliegenden Erfindung wird bei einem Verfahren zum Abfahren einer vorgegebenen Arbeitsbahn mit einem Roboter auf Basis eines geplanten Geschwindigkeitsprofils für die Arbeitsbahn das Geschwindigkeitsprofil vor dem Abfahren mit einem vorgegebenen Profilparameter geplant und vor dem Abfahren modifiziert, falls eine Überschreitung einer vorgegebenen Begrenzung einer Geschwindigkeit, Kraft oder Beschleunigung bei dem mit dem vorgegebenen Profilparameter geplanten Geschwindigkeitsprofil prognostiziert wird.

Hierdurch kann in einer Ausführung die Gefahr, dass beim Abfahren der vorgegebenen Arbeitsbahn unzulässig hohe Achslasten, -geschwindigkeiten und/oder -beschleunigungen auftreten, reduziert und so insbesondere ein mühsames Nachjustieren vermieden werden. In einer Ausführung kann hierdurch der vorgegebene Profilparameter offensiv gewählt werden, so dass das Verfahren das entsprechende Geschwindigkeitsprofil selbsttätig so modifiziert, dass die vorgegebene Begrenzung (voraussichtlich) eingehalten wird.

Zur kompakteren Darstellung wird vorliegend auch ein antiparalleles Kräftepaar bzw. ein Drehmoment verallgemeinernd als Kraft im Sinne der vorliegenden Erfindung bezeichnet.

Der Roboter weist in einer Ausführung einen mehr-, insbesondere wenigstens drei-, in einer Ausführung wenigstens sechs-, insbesondere wenigstens siebenachsigen Roboterarm auf. Für solche Roboter ist das Verfahren besonders geeignet.

In einer Ausführung wird zum Modifizieren des Geschwindigkeitsprofils das mit dem vorgegebenen Profilparameter geplante Geschwindigkeitsprofil in Abhängigkeit von, in einer Ausführung proportional zu, einem prognostizierten Überschreiten der vorgegebenen Begrenzung modifiziert, insbesondere in Richtung einer Abszisse, insbesondere einer Zeitachse, gestreckt und/oder in Richtung einer Ordinate, insbesondere Geschwindigkeitsachse, gestaucht.

Zusätzlich oder alternativ wird, insbesondere hierzu, in einer Ausführung zum Modifizieren des Geschwindigkeitsprofils das Geschwindigkeitsprofil mit dem, insbesondere in Abhängigkeit von, in einer Ausführung proportional zu, einem prognostizierten Überschreiten der vorgegebenen Begrenzung, modifizierten, insbesondere reduzierten, Profilparameter neu, in einer Ausführung in gleicher Weise wie das mit dem vorgegebenen Profilparameter geplante Geschwindigkeitsprofil, geplant.

Hierdurch kann in einer Ausführung das Geschwindigkeitsprofil, insbesondere rechentechnisch, vorteilhaft, modifiziert, insbesondere eine Konvergenz eines iterativen Modifizierens verbessert, werden. Zusätzlich oder alternativ kann hierdurch in einer Ausführung eine (geometrische bzw. Grund)Form des Geschwindigkeitsprofils und so ein gewünschtes bzw. erwartetes Verhalten des Roboters beim Abfahren der Bahn prinzipiell erhalten bleiben.

In einer Ausführung wird das prognostizierte Überschreiten unter Ausblenden eines Anteils der Geschwindigkeit, Kraft bzw. Beschleunigung prognostiziert, der aus einer fest vorgegebenen Grundbewegung und/oder statischen Belastung und/oder nicht aus (einer dynamischen Belastung infolge von) dem Abfahren der vorgegebenen Arbeitsbahn resultiert.

Dem liegt die Idee zugrunde, dass eine Modifikation des Geschwindigkeitsprofils nur Geschwindigkeiten, Kräfte bzw. Beschleunigungen (zum Unterschreiten der Begrenzung) reduzieren kann, die aus dem Abfahren der vorgegebenen Arbeitsbahn resultieren. Entsprechend wird in einer Ausführung vorgeschlagen, beim Modifizieren auch nur diesen Anteil zu berücksichtigen.

Hierzu wird in einer Ausführung ein Dynamikmodell des Roboters sowohl mit Geschwindigkeiten, Kräften bzw. Beschleunigungen, die sich beim Abfahren der vorgegebenen Arbeitsbahn mit dem geplanten Geschwindigkeitsprofils ergeben, als auch unter der Annahme eines Geschwindigkeitsprofils konstant gleich Null ausgewertet. Letztes entspricht einer fest vorgegebenen Grundbewegung bzw. statischen Belastung, so dass durch Differenzbildung der Anteil ermittelt werden kann, der aus dem Abfahren der vorgegebenen Arbeitsbahn resultiert.

In einer Ausführung ist bzw. wird die Arbeitsbahn durch eine oder mehrere Posen einer roboterfesten Referenz im, insbesondere kartesischen, Arbeitsraum des Roboters vorgegeben. Eine Pose kann dabei eine ein-, zwei- oder dreidimensionale Position und/oder eine ein-, zwei- oder dreidimensionale Orientierung umfassen, insbesondere sein. Die roboterfeste Referenz kann insbesondere den TCP des Roboters umfassen, insbesondere dieser sein.

In einer Ausführung wird die Arbeitsbahn durch Programmierbefehle mit der bzw. den Posen vorgegeben und/oder weist eine vorgegebene geometrische Form auf, sie kann insbesondere eine Linearbewegung und/oder Kreisbewegung und/oder wenigstens ein(en) Spline umfassen, insbesondere sein.

Erfindungsgemäß weist in einer Ausführung das Geschwindigkeitsprofil ein Profil einer translatorischen Geschwindigkeit und/oder ein Profil einer oder mehrerer rotatorischer Geschwindigkeiten einer bzw. der roboterfesten Referenz im Arbeitsraum des Roboters auf.

Somit wird bzw. ist in einer Ausführung die Arbeitsbahn und/oder das Geschwindigkeitsprofil im Arbeitsraum des Roboters bzw. der roboterfesten Referenz definiert bzw. vorgegeben bzw. geplant.

Hierdurch kann in einer Ausführung ein gewünschtes bzw. erwartetes Verhalten des Roboters beim Abfahren der Bahn realisiert werden.

Die vorgegebene Begrenzung kann eine Begrenzung einer Geschwindigkeit, Kraft, insbesondere also eines Drehmoments, und/oder Beschleunigung einer oder mehrerer Achsen, insbesondere Motoren und/oder Getriebe, des Roboters aufweisen, insbesondere sein.

Mit anderen Worten werden in einer Ausführung für eine Arbeitsbahn und ein Geschwindigkeitsprofil, die bzw. das im Arbeitsraum des Roboters bzw. der roboterfesten Referenz definiert sind, Geschwindigkeits-, Beschleunigungs- und/oder Kraft-, insbesondere Drehmomentbegrenzungen im Achsraum des Roboters berücksichtigt.

Hierdurch kann in einer Ausführung die Gefahr einer Überlastung der Motoren und/oder Getriebe reduziert werden.

In einer Ausführung weist der Profilparameter eine vorgegebene, insbesondere minimale, maximale und/oder mittlere, insbesondere konstante, Geschwindigkeit und/oder eine vorgegebene, insbesondere minimale, maximale und/oder mittlere, insbesondere konstante, Beschleunigung auf. Der Profilparameter kann somit in einer Ausführung mehrdimensional sein und insbesondere in an sich bekannter Weise eine Beschleunigung für eine Beschleunigungs- und eine Verzögerungsphase, insbesondere -rampe, die in einer Ausführung symmetrisch sind, und/oder eine Konstantfahrgeschwindigkeit eines Trapezprofils aufweisen, wobei die Konstantfahrgeschwindigkeit gegebenenfalls nicht erreicht wird.

Entsprechend kann das Geschwindigkeitsprofil eine anfängliche Beschleunigungsphase, eine abschließende Verzögerungsphase und/oder eine Konstantfahrphase, insbesondere ein Trapez- oder Dreieckprofil, aufweisen, insbesondere sein.

Dies ist in der Robotik sehr gebräuchlich, so dass hierdurch in einer Ausführung vorteilhaft vorhandene Steuerung(salgorithm)en einfach verwendet werden können.

In einer Ausführung wird eine Überschreitung der vorgegebenen Begrenzung auf Basis eines Kinematik- und/oder eines Dynamikmodells des Roboters prognostiziert. Erfindungsgemäß wird eine Überschreitung der vorgegebenen Begrenzung an diskreten Profilpunkteiner Beschleunigungsänderung prognostiziert.

Mithilfe eines Kinematikmodells des Roboters können in einer Ausführung für bestimmte Punkte der Arbeitsbahn und des Geschwindigkeitsprofils, die im Arbeitsraum definiert sind, entsprechende Achsgeschwindigkeiten und -beschleunigungen ermittelt und so eine Überschreitung einer entsprechenden Begrenzung erfasst werden. Ein Kinematikmodell im Sinne der vorliegenden Erfindung transformiert somit Achskoordinaten und/oder deren Zeitableitungen und Posen einer bzw. der roboterfesten Referenz im Arbeitsraum und/oder deren Zeitableitungen ineinander.

Mithilfe eines Dynamikmodells des Roboters können in einer Ausführung für bestimmte Punkte der Arbeitsbahn und des Geschwindigkeitsprofils, die im Arbeitsraum definiert sind, entsprechende Achskräfte, insbesondere also Motor- und/oder Getriebemomente, ermittelt und so eine Überschreitung einer entsprechenden Begrenzung erfasst werden. Ein Dynamikmodell im Sinne der vorliegenden Erfindung ordnet somit Achskoordinaten und/oder deren Zeitableitungen einerseits und Achskräfte andererseits einander zu.

Durch die erfindungsgemäße Prognose nur an diskreten Profilpunkten kann das Geschwindigkeitsprofil stichpunktartig und somit rechentechnisch effektiv überprüft werden.

Dabei können insbesondere Punkte einer Beschleunigungsänderung berücksichtigt bzw. untersucht werden, da hier besonders signifikante Geschwindigkeiten, Kräfte und Beschleunigungen auftreten. Zusätzlich oder alternativ kann in einer Ausführung eine Überschreitung auch an anderen diskreten Profilpunkten prognostiziert werden, insbesondere an Punkte, die äquidistant zwischen Punkte einer Beschleunigungsänderung liegen oder dergleichen.

Erfindungsgemäß wird das modifizierte Geschwindigkeitsprofil vor dem Abfahren, gegebenenfalls mehrfach, erneut modifiziert, falls eine Überschreitung der vorgegebenen Begrenzung auch bei dem bereits (zuvor) modifizierten Geschwindigkeitsprofil prognostiziert wird. Mit anderen Worten kann das Geschwindigkeitsprofil in einer Ausführung iterativ modifiziert werden, insbesondere bis keine Überschreitung der vorgegebenen Begrenzung mehr prognostiziert wird oder eine andere Abbruchbedingung erfüllt ist.

Entsprechend wird in einer Ausführung in vorbeschriebener Weise zum erneuten Modifizieren des bereits modifizierten Geschwindigkeitsprofils dieses in Abhängigkeit von, insbesondere proportional zu, einem prognostizierten Überschreiten der vorgegebenen Begrenzung bei dem bereits modifizierten Geschwindigkeitsprofil erneut modifiziert bzw. zum erneuten Modifizieren des bereits modifizierten Geschwindigkeitsprofils das bereits modifizierte Geschwindigkeitsprofil mit dem, insbesondere in Abhängigkeit von einem prognostizierten Überschreiten der vorgegebenen Begrenzung, bereits modifizierten Profilparameter erneut, insbesondere in gleicher Weise wie das mit dem vorgegebenen Profilparameter geplante Geschwindigkeitsprofil, geplant.

In einer Ausführung wird ein Fehler signalisiert und in einer Weiterbildung das Verfahren abgebrochen bzw. das Abfahren der vorgegebenen Arbeitsbahn unterlassen, insbesondere verhindert, falls eine Überschreitung der vorgegebenen Begrenzung bei wenigstens einem Punkt der Arbeitsbahn prognostiziert wird, wenn für diesen Punkt im Geschwindigkeitsprofil eine konstante Geschwindigkeit gleich Null angenommen wird.

Dem liegt die Idee zugrunde, dass in einem solchen Fall kein Modifizieren des Geschwindigkeitsprofils ausreicht, um die Überschreitung der vorgegebenen Begrenzung zu vermeiden, da diese bereits aufgrund einer vorgegebenen Grundbewegung und/oder statischen Belastung überschritten wird.

Nach einer Ausführung der vorliegenden Erfindung ist eine Steuerung, insbesondere hard- und/oder software-, insbesondere programmtechnisch, zur Durchführung eines hier beschriebenen Verfahrens eingerichtet. In einer Ausführung weist die Steuerung Mittel zum Planen des Geschwindigkeitsprofils mit einem vorgegebenen Profilparameter und Mittel zum Modifizieren des mit dem vorgegebenen Profilparameter geplanten Geschwindigkeitsprofils vor dem Abfahren, falls eine Überschreitung einer vorgegebenen Begrenzung einer Geschwindigkeit, Kraft oder Beschleunigung bei dem mit dem vorgegebenen Profilparameter geplanten Geschwindigkeitsprofil prognostiziert wird, auf.

In einer Ausführung weist die Steuerung bzw. ihr(e) Mittel auf:

- Mittel zum Modifizieren des mit dem vorgegebenen Profilparameter geplanten oder modifizierten Geschwindigkeitsprofil in Abhängigkeit von, insbesondere proportional zu, einem prognostizierten Überschreiten der vorgegebenen Begrenzung zum (erneuten) Modifizieren des mit dem vorgegebenen Profilparameter geplanten oder bereits modifizierten Geschwindigkeitsprofils;

- Mittel zum neuen Planen des Geschwindigkeitsprofils mit dem, insbesondere in Abhängigkeit von einem prognostizierten Überschreiten der vorgegebenen Begrenzung, modifizierten Profilparameter, insbesondere in gleicher Weise wie das mit dem vorgegebenen Profilparameter geplante Geschwindigkeitsprofil zum (erneuten) Modifizieren des mit dem vorgegebenen Profilparameter geplanten oder bereits modifizierten Geschwindigkeitsprofils;

- Mittel zum Ausblenden eines Anteils der Geschwindigkeit, Kraft bzw. Beschleunigung, der aus einer fest vorgegebenen Grundbewegung und/oder statischen Belastung und/oder nicht aus dem Abfahren der vorgegebenen Arbeitsbahn resultiert, beim Prognostizieren des Überschreitens;

- Mittel zum Prognostizieren einer Überschreitung der vorgegebenen Begrenzung auf Basis eines Kinematik- und/oder eines Dynamikmodells des Roboters und/oder an diskreten Profilpunkten, insbesondere Punkten einer Beschleunigungsänderung;

- Mittel zum erneuten Modifizieren des bereits modifizierten Geschwindigkeitsprofils vor dem Abfahren, falls eine Überschreitung der vorgegebenen Begrenzung auch bei dem bereits modifizierten Geschwindigkeitsprofil prognostiziert wird;

- Mittel zum Signalisieren eines Fehlers, falls eine Überschreitung der vorgegebenen Begrenzung bei wenigstens einem Punkt der Arbeitsbahn prognostiziert wird, wenn für diesen Punkt im Geschwindigkeitsprofil eine konstante Geschwindigkeit gleich Null angenommen wird.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter steuern bzw. betreiben kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch die Steuerung bzw. ihr(e) Mittel.

Weitere Vorteile und Merkmale ergeben sich aus den Unteransprüchen und den Ausführungsbeispielen. Hierzu zeigt, teilweise schematisiert:

Fig. 1:      eine Roboteranordnung mit einem Roboter und einer Steuerung nach einer Ausführung der vorliegenden Erfindung;

Fig. 2:      ein Trapezprofil; und

Fig. 3:      ein Verfahren zum Steuern des Roboters nach einer Ausführung der vorliegenden Erfindung.

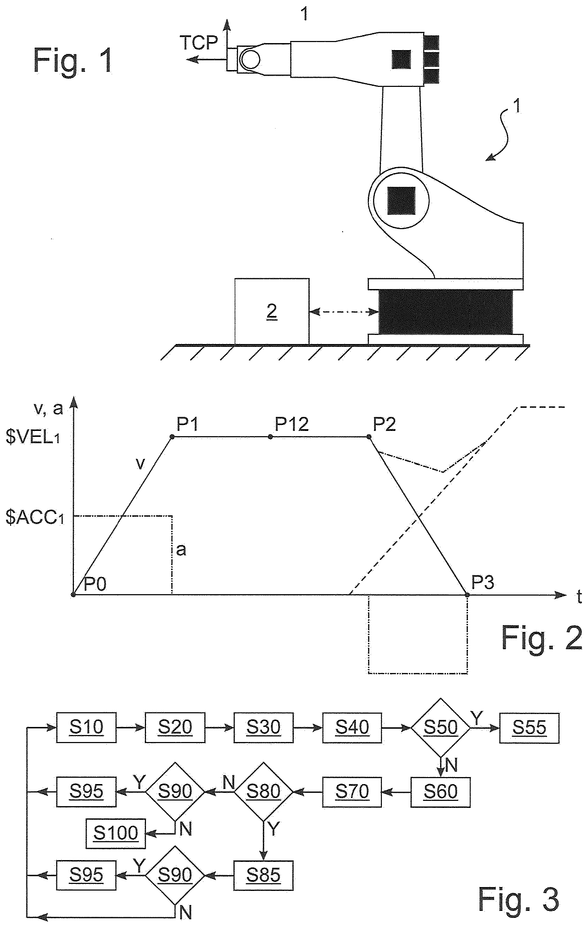

Fig. 1 zeigt eine Roboteranordnung mit einem Roboter 1 und einer (Roboter)Steuerung 2 nach einer Ausführung der vorliegenden Erfindung.

Der Roboter soll mit seinem TCP eine vorgegebene Arbeitsbahn in seinem Arbeitsraum abfahren, im Ausführungsbeispiel exemplarisch in einem festen oder, beispielsweise mit einem Förderband oder dergleichen, bewegten Koordinatensystem vorgegebene, zum Beispiel geteachte, Posen miteinander linear verbinden, die jeweils eine dreidimensionale Position und Orientierung des TCPs im Arbeitsraum definieren, insbesondere also auf einer Geraden unter Überführung der Anfangs- in die Endorientierung.

Hierzu wird in einem Schritt S10 ein Geschwindigkeitsprofil mit einem Trapezprofil für die translatorische Geschwindigkeit v des TCPs entlang der Bahn sowie analoge Trapezprofile für seine Rotationsgeschwindigkeit um zwei Achsen auf Basis einer für die Translation bzw. Rotationen vorgegebenen Beschleunigung $ACC_k$ (k=1: translatorische Geschwindigkeit; k=2, 3: Rotationsgeschwindigkeit) für eine anfängliche Beschleunigungsrampe bzw. -phase und eine hierzu symmetrische Verzögerungsrampe bzw. -phase am Ende sowie einer für die Translation bzw. Rotationen vorgegebenen Geschwindigkeit $VEL_k$ für eine Konstantfahrphase dazwischen geplant, wie in Fig. 2 dargestellt, in der neben der translatorischen Geschwindigkeit v auch die entsprechende Beschleunigung a strich-doppelpunktiert dargestellt ist.

Für die Punkte PO (Beginn der Beschleunigungsphase), P1 (Ende der Beschleunigungsphase), P12 (Mitte der Konstantfahrphase), P2 (Beginn der Verzögerungsphase) und P3 (Ende der Verzögerungsphase) werden in einem Schritt S20 mithilfe inverser Transformation aus dem Arbeits- in den Achsraum und numerischer Integration bzw. Differentiation die Achskoordinaten q und deren erste und zweite Zeitableitung d$q$/dt, d$^2q$/dt$^2$ ermittelt.

Mit diesen Achskoordinaten, -geschwindigkeiten und -beschleunigungen werden in einem Schritt S30 mithilfe eines Dynamikmodells des Roboters in der Form

$$\boldsymbol{M(q)} \cdot \mathrm{d}^2\boldsymbol{q}/\mathrm{dt}^2 + \boldsymbol{h}(\boldsymbol{q}, \mathrm{d}\boldsymbol{q}/\mathrm{dt}) = \boldsymbol{T}$$

mit der Massenmatrix $\boldsymbol{M}$, dem Vektor $\boldsymbol{h}$ der statischen und dynamischen Lasten und den Achsmomenten $\boldsymbol{T}$ die bei den geplanten Trapezprofilen in den Punkte P0 - P3 auftretenden Gesamt-Achsmomente $\boldsymbol{T}_{tot}$ ermittelt.

Zusätzlich werden in einem Schritt S40 mithilfe des Dynamikmodells die für d$q$/dt = d$^2q$/dt$^2$ = $\boldsymbol{0}$ in den Punkte P0 - P3 auftretenden Grundlast-Achsmomente $\boldsymbol{T}_{sta}$ ermittelt.

In einem Schritt S50 wird überprüft, ob an wenigstens einem der Punkte P0 - P3 (bereits) wenigstens eine Komponente der Grundlast-Achsmomente $\boldsymbol{T}_{sta}$ ein für die entsprechende Achse vorgegebenes zulässiges Maximalmoment überschreitet oder eine Achsgeschwindigkeit wenigstens einer Achse eine für die entsprechende Achse vorgegebene zulässige Maximalgeschwindigkeit überschreitet.

Ist dies der Fall (S50: "Y"), wird eine Fehlermeldung ausgegeben und die Planung abgebrochen (S55).

Andernfalls (S50: "N") werden in einem Schritt S60 für die Punkte P1 - P2 jeweils die Verhältnisse $FVEL_{i,j}$ der bei den geplanten Trapezprofilen vorliegenden Achsgeschwindigkeiten $dq_i(P_j)/dt$ dividiert durch die vorgegebenen zulässigen Maximalgeschwindigkeiten für die entsprechende Achse i ermittelt.

Zusätzlich werden in Schritt S60 für die Punkte P0 - P3 jeweils die Geschwindigkeitsprofil-Achsmomente $\boldsymbol{T}_{dyn} = \boldsymbol{T}_{tot} - \boldsymbol{T}_{sta}$ sowie die Verhältnisse $FACC_{i,j}$ der bei den geplanten Trapezprofilen vorliegenden Geschwindigkeitsprofil-Achsmomente $T_i(P_j)/dt$ dividiert durch die vorgegebenen zulässigen Maximalmomente für die entsprechende Achse i ermittelt.

In einem Schritt S70 wird der größte Wert FVEL der Verhältnisse $FVEL_{i,j}$ (FVEL = Max{ $FVEL_{i,j}$ }) und der größte Wert FACC der Verhältnisse $FACC_{i,j}$ (FACC = Max{ $FACC_{i,j}$ }) ermittelt.

Ist der Wert FVEL größer als 1 (S80: "Y"), so werden in einem Schritt S85 die für die Translation bzw. Rotationen vorgegebenen Geschwindigkeiten $VEL_k$ für die Konstantfahrphase um diesen Faktor reduziert: $VEL_k \rightarrow VEL_k/FVEL$

Ist der Wert FACC größer als 1 (S90: "Y"), so werden in einem Schritt S95 die für die Translation bzw. Rotationen vorgegebene Beschleunigungen $ACC_k$ für

die Beschleunigungs- und Verzögerungsphase um diesen Faktor reduziert:

$$ACC_k \rightarrow \$ACC_k/FACC$$

Sofern wenigstens einer der Werte FVEL, FACC größer als 1 ist (S80: "Y" ODER S90: "Y"), kehrt das Verfahren zu Schritt S10 zurück und plant mit der reduzierten Beschleunigung $\$ACC_k$ bzw. Geschwindigkeit $\$VEL_k$ jeweils ein neues Trapezprofil für die Translation bzw. Rotationen.

Dadurch wird das in Fig. 2 ausgezogen dargestellte Trapezprofil in Richtung der Zeitachse t gestreckt und in Richtung der Geschwindigkeitsachse v gestaucht, behält jedoch seine trapezartige Grundform bei.

Andernfalls (S80: "N" UND S90: "N") ist die Planung beendet und der Roboter fährt in einem Schritt S100 die vorgegebene Arbeitsbahn mit dem geplanten Geschwindigkeitsprofil mit den geplanten Trapezprofilen ab.

Obwohl in der vorhergehenden Beschreibung exemplarische Ausführungen erläutert wurden, sei darauf hingewiesen, dass eine Vielzahl von Abwandlungen möglich ist.

So wurde das Ausführungsbeispiel anhand einer Linearbewegung mit Endhalt erläutert. Es kann gleichermaßen für andere Arbeitsbahnen, beispielsweise Kreisbahnen oder dergleichen, durchgeführt werden. Zusätzlich oder alternativ können die Arbeitsbahnen auch durch Überschleifen in weitere Arbeitsbahnen übergehen, wie in Fig. 2 durch ein gestrichelt angedeutetes Trapezprofil für eine weitere Linearbewegung und ein strichpunktiert angedeutetes Dreiecksprofil für eine Überschleifbewegung angedeutet.

Zusätzlich oder alternativ können anstelle der Achsmomente auch die Achsbeschleunigungen selber verwendet werden, d.h. das Dynamikmodell entfallen bzw. zu $\boldsymbol{T} = \mathrm{d}^2\boldsymbol{q}/\mathrm{d}t^2$ entarten.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

Bezugszeichenliste

| | |
|---|---|
| 1 | Roboter |
| 2 | Steuerung |
| TCP | Tool Center Point |
| $\$ACC_1$, $\$VEL_1$ | Profilparameter |
| PO-P3 | Profilpunkte |

**Patentansprüche**

1. Verfahren zum Abfahren (S100) einer vorgegebenen Arbeitsbahn mit einem Roboter (1) auf Basis eines geplanten Geschwindigkeitsprofils für die Arbeitsbahn, wobei das Geschwindigkeitsprofil mit einem vorgegebenen Profilparameter ($\$ACC_1$, $\$VEL_1$) geplant (S10) wird,

   wobei eine Überschreitung einer vorgegebenen Begrenzung einer Geschwindigkeit, Kraft oder Beschleunigung bei dem mit dem vorgegebenen Profilparameter geplanten Geschwindigkeitsprofil prognostiziert wird und das mit dem vorgegebenen Profilparameter geplante Geschwindigkeitsprofil vor dem Abfahren modifiziert (S85, S95) wird,
   **dadurch gekennzeichnet, dass**
   das modifizierte Geschwindigkeitsprofil vor dem Abfahren erneut modifiziert wird, falls eine Überschreitung der vorgegebenen Begrenzung auch bei dem bereits modifizierten Geschwindigkeitsprofil prognostiziert wird,
   wobei das Geschwindigkeitsprofil ein Profil einer translatorischen Geschwindigkeit und/oder ein Profil wenigstens einer rotatorischen Geschwindigkeit einer roboterfesten Referenz im Arbeitsraum des Roboters aufweist,
   und wobei eine Überschreitung der vorgegebenen Begrenzung nur an diskreten Profilpunkten einer Beschleunigungsänderung (PO-P3) prognostiziert wird und die vorgegebene Arbeitsbahn mit dem Roboter mit dem erneut modifizierten Geschwindigkeitsprofil abgefahren wird (S100).

2. Verfahren nach Anspruch 1, **dadurch gekennzeichnet, dass** zum Modifizieren des Geschwindigkeitsprofils das mit dem vorgegebenen Profilparameter geplante Geschwindigkeitsprofil in Abhängigkeit von, insbesondere proportional zu, einem prognostizierten Überschreiten der vorgegebenen Begrenzung modifiziert wird.

3. Verfahren nach einem der vorhergehenden Ansprüche, **dadurch gekennzeichnet, dass** zum Modifizieren des Geschwindigkeitsprofils das Geschwindigkeitsprofil mit dem, insbesondere in Abhängigkeit von einem prognostizierten Überschreiten der vorgegebenen Begrenzung, modifizierten Profilparameter neu, insbesondere in gleicher Weise wie das mit dem vorgegebenen Profilparameter geplante Geschwindigkeitsprofil, geplant wird.

4. Verfahren nach einem der vorhergehenden Ansprüche, **dadurch gekennzeichnet, dass** das prognostizierte Überschreiten unter Ausblenden eines Anteils der Geschwindigkeit, Kraft bzw. Beschleunigung prognostiziert wird, der aus einer fest vorgegebenen Grundbewegung und/oder statischen Belastung des Roboters und/oder nicht aus dem Abfahren der vorgegebenen Arbeitsbahn resultiert.

5. Verfahren nach einem der vorhergehenden Ansprüche, **dadurch gekennzeichnet, dass** die Arbeitsbahn durch wenigstens eine Pose einer roboterfesten Referenz im Arbeitsraum des Roboters vorgegeben ist.

6. Verfahren nach einem der vorhergehenden Ansprüche, **dadurch gekennzeichnet, dass** die vorgegebene Begrenzung eine Begrenzung einer Geschwindigkeit, Kraft und/oder Beschleunigung wenigstens einer Achse des Roboters aufweist.

7. Verfahren nach einem der vorhergehenden Ansprüche, **dadurch gekennzeichnet, dass** der Profilparameter eine vorgegebene Geschwindigkeit und/oder Beschleunigung aufweist.

8. Verfahren nach einem der vorhergehenden Ansprüche, **dadurch gekennzeichnet, dass** das Geschwindigkeitsprofil eine anfängliche Beschleunigungsphase, eine abschließende Verzögerungsphase und/oder eine Konstantfahrphase, insbesondere ein Trapez- oder Dreieckprofil, aufweist.

9. Verfahren nach einem der vorhergehenden Ansprüche, **dadurch gekennzeichnet, dass** eine Überschreitung der vorgegebenen Begrenzung auf Basis eines Kinematik- und/oder eines Dynamikmodells des Roboters prognostiziert wird.

10. Verfahren nach einem der vorhergehenden Ansprüche, **dadurch gekennzeichnet, dass** ein Fehler signalisiert wird (S55), falls eine Überschreitung der vorgegebenen Begrenzung bei wenigstens einem Punkt der Arbeitsbahn prognostiziert wird, wenn für diesen Punkt im Geschwindigkeitsprofil eine konstante Geschwindigkeit gleich Null angenommen wird.

11. Steuerung (2) zum Abfahren einer vorgegebenen Arbeitsbahn mit einem Roboter (1) auf Basis eines geplanten Geschwindigkeitsprofils für die Arbeitsbahn, wobei die Steuerung zur Durchführung eines Verfahrens nach einem der vorhergehenden Ansprüche eingerichtet ist.

12. Roboteranordnung mit einem Roboter (1) und einer Steuerung (2) nach dem vorhergehenden Anspruch zum Steuern des Roboters.

13. Computerprogrammprodukt mit einem Programmcode, der auf einem von einem Computer lesbaren Medium gespeichert ist, zur Durchführung eines Verfahrens nach einem der vorhergehenden Ansprüche 1 - 10, wenn der Programmcode auf einer Roboteranordnung nach Anspruch 12 ausgeführt wird.

**Claims**

1. A method of moving along (S100) a specified working path with a robot (1) on the basis of a planned speed profile for the working path, wherein the speed profile is planned (S10) with a specified profile parameter ($ACC_1$, $VEL_1$),

    wherein it is predicted that a specified limit of a speed, a force or an acceleration will be exceeded for the speed profile that is planned with the specified profile parameter, and the speed profile that is planned with the specified profile parameter is modified (S85, S95) before the moving along,
    **characterised in that**
    the modified speed profile is modified again before the moving along if it is predicted that the specified limit will also be exceeded for the speed profile that has already been modified, wherein the speed profile comprises a profile of a translational speed and / or a profile of at least one rotational speed of a reference fixed with respect to the robot in the working space of the robot,
    and wherein an exceeding of the specified limit is predicted only at discrete profile points of a change in acceleration (P0-P3) and the specified working path is moved along (S100) with the robot with the newly modified speed profile.

2. The method according to claim 1, **characterised in that**, in order to modify the speed profile, the speed profile planned with the specified profile parameter is modified as a function of, in particular proportionally to, a predicted exceeding of the specified limit.

3. The method according to any one of the preceding claims, **characterised in that**, in order to modify the speed profile, the speed profile is planned anew with the modified profile parameter, in particular in the same way as the speed profile that has been planned with the specified profile parameter, in particular in dependence upon a predicted exceeding of the specified limit.

4. The method according to any one of the preceding claims, **characterised in that** the predicted exceeding is predicted while suppressing a portion of the speed, force or acceleration which results from a basic movement fixedly specified and / or a static load of the robot and / or not from the moving along the specified working path.

5. The method according to any one of the preceding claims, **characterised in that** the working path is specified by at least one pose of a reference fixed with respect to the robot in the working space of the robot.

6. The method according to any one of the preceding claims, **characterised in that** the specified limit comprises a limit of a speed, a force and / or an acceleration of at least one axis of the robot.

7. The method according to any one of the preceding claims, **characterised in that** the profile parameter comprises a specified speed and / or acceleration.

8. The method according to any one of the preceding claims, **characterised in that** the speed profile comprises an initial acceleration phase, a final deceleration phase and / or a constant speed phase, in particular a trapezoidal profile or a triangular profile.

9. The method according to any one of the preceding claims, **characterised in that** an exceeding of the specified limit is predicted on the basis of a kinematic and / or a dynamic model of the robot.

10. The method according to any one of the preceding claims, **characterised in that** an error is signalled (S55) if the specified limit is predicted to be exceeded at at least one point of the working path when a constant speed of zero is assumed for this point in the speed profile.

11. A control facility (2) for moving along a specified working path with a robot (1) on the basis of a planned speed profile for the working path, wherein the control facility is arranged to carry out a method according to any one of the preceding claims.

12. A robot arrangement comprising a robot (1) and a control facility (2) according to the preceding claim for controlling the robot.

13. A computer program product comprising a program code which is stored on a computer-readable medium for carrying out a method according to any one of the preceding claims 1 to 10 when the program code is executed on a robot arrangement according to claim 12.

**Revendications**

1. Procédé pour parcourir (S100) une trajectoire de travail prédéfinie avec un robot (1) sur la base d'un profil de vitesse planifié pour la trajectoire de travail, dans lequel le profil de vitesse est planifié avec un paramètre de profil prédéfini ($ACC_1$, $VEL_1$) (S10),

dans lequel un dépassement d'une limite prédéfinie d'une vitesse, d'une force ou d'une accélération est prévu pour le profil de vitesse planifié avec le paramètre de profil prédéfini et le profil de vitesse planifié avec le paramètre de profil prédéfini est modifié avant le déplacement (S85, S95),
**caractérisé en ce que**
le profil de vitesse modifié est de nouveau modifié avant le déplacement si un dépassement de la limite prédéfinie est également prévu pour le profil de vitesse déjà modifié, dans lequel le profil de vitesse présente un profil d'une vitesse de translation et/ou un profil d'au moins une vitesse de rotation d'une référence solidaire du robot dans l'espace de travail du robot, et dans lequel un dépassement de la limite prédéfinie n'est prévu qu'à des points de profil discrets d'une modification d'accélération (P0-P3) et la trajectoire de travail prédéfinie est parcourue avec le robot avec le profil de vitesse à nouveau modifié (S100).

2. Procédé selon la revendication 1, **caractérisé en ce que**, pour modifier le profil de vitesse, le profil de vitesse prévu avec le paramètre de profil prédéfini est modifié en fonction, en particulier proportionnellement à, d'un dépassement prévu de la limite prédéfinie.

3. Procédé selon l'une quelconque des revendications précédentes, **caractérisé en ce que**, pour modifier le profil de vitesse, le profil de vitesse est planifié à nouveau avec le paramètre de profil modifié, en particulier en fonction d'un dépassement prévu de la limite prédéfinie, en particulier de la même manière que le profil de vitesse planifié avec le paramètre de profil prédéfini.

4. Procédé selon l'une quelconque des revendications précédentes, **caractérisé en ce que** le dépassement prévu est prévu en masquant une partie de la vitesse, de la force ou de l'accélération qui résulte d'un mouvement de base et/ou d'une charge statique du robot fixement prédéfinis et/ou qui ne résulte pas du parcours de la trajectoire de travail prédéfinie.

5. Procédé selon l'une quelconque des revendications précédentes, **caractérisé en ce que** la trajectoire de travail est prédéfinie par au moins une pose d'une référence solidaire du robot dans l'espace de travail du robot.

6. Procédé selon l'une quelconque des revendications précédentes, **caractérisé en ce que** la limite prédéfinie présente une limite d'une vitesse, d'une force et/ou d'une accélération d'au moins un axe du robot.

7. Procédé selon l'une quelconque des revendications précédentes, **caractérisé en ce que** le paramètre de profil présente une vitesse et/ou une accélération prédéfinies.

8. Procédé selon l'une quelconque des revendications précédentes, **caractérisé en ce que** le profil de vitesse présente une phase initiale d'accélération, une phase finale de décélération et/ou une phase de conduite constante, en particulier un profil trapézoïdal ou triangulaire.

9. Procédé selon l'une quelconque des revendications précédentes, **caractérisé en ce qu'**un dépassement de la limite prédéfinie est prévu sur la base d'un modèle cinématique et/ou dynamique du robot.

10. Procédé selon l'une quelconque des revendications précédentes, **caractérisé en ce qu'**un défaut est signalé (S55) si un dépassement de la limite prédéfinie est prévu pour au moins un point de la trajectoire de travail, si une vitesse constante égale à zéro est supposée pour ledit point dans le profil de vitesse.

11. Commande (2) pour parcourir une trajectoire de travail prédéfinie avec un robot (1) sur la base d'un profil de vitesse planifié pour la trajectoire de travail, dans laquelle la commande est mise au point pour effectuer un procédé selon l'une quelconque des revendications précédentes.

12. Ensemble de robot avec un robot (1) et une commande (2) selon la revendication précédente pour commander le robot.

13. Produit-programme d'ordinateur avec un code de programme, qui est stocké sur un support lisible par un ordinateur, pour mettre en œuvre un procédé selon l'une quelconque des revendications précédentes 1 à 10 lorsque le code de programme est exécuté sur un ensemble de robot selon la revendication 12.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2315093 A1

**In der Beschreibung aufgeführte Nicht-Patentliteratur**

- **C. MELCHIORRI**. *Trajectory Planning for Robot Manipulators Part 2*, 1-21

- **J. BARTENSCHLAGER et al.** Kinematische Beschreibung von Industrierobotern. *Handhabungstechnik mit Robotertechnik*, 287-360